Europäisches Patentamt

European Patent Office

Office européen des brevets

(19)

(11) Publication number: **0 403 234 A2**

## (12) EUROPEAN PATENT APPLICATION

(21) Application number: **90306410.3**

(22) Date of filing: **12.06.90**

(51) Int. Cl.⁵: **B62D 5/04**

(30) Priority: **14.06.89 GB 8913686**
**14.06.89 GB 8913684**

(43) Date of publication of application:
**19.12.90 Bulletin 90/51**

(84) Designated Contracting States:
**DE FR GB IT**

(71) Applicant: **LUCAS INDUSTRIES public limited company**
**Great King Street**
**Birmingham, B19 2XF West Midlands(GB)**

(72) Inventor: **Harrison, Anthony William**
**63 Middle Park Road**
**Selly Oak, Birmingham, B29 4BH(GB)**

(74) Representative: **Spall, Christopher John et al**
**BARKER, BRETTELL & DUNCAN 138 Hagley Road**
**Edgbaston Birmingham B16 9PW(GB)**

(54) **Servo mechanisms for rotary shafts.**

(57) A servo mechanism for a rotary shaft (1) has an electric motor (5) mounted on the shaft to augment an input torque applied to the shaft, the motor (5) being operated by a controller (8) in response to signals from torque sensing means (9) mounted on the shaft (1). The two members (6, 7) of the electric motor (5), one carrying the field magnet means, and the other the variable current coils (10), are arranged for contra-rotation, with one fixed to and rotatable with the shaft (1), and the other driven from the shaft (1) by a gear train (11). This arrangement enables the efficiency of the motor (5) to be improved. The gear train (11) may be of the planetary or bevel type. The controller (8) may also be mounted on the shaft (1). The servo mechanism may be used in a power-assisted vehicle steering system, being mounted on the steering column.

FIG.2.

# SERVO MECHANISMS FOR ROTARY SHAFTS

This invention relates to a servo mechanism for a rotary shaft of the kind in which an electric motor mounted on the shaft is operated in response to an input torque applied to the shaft to produce a given torque output from the shaft.

Such servo mechanisms are used for power-assisted vehicle steering systems, to assist operation of the steering column, in response to the input torque applied to the steering wheel. The electric motor is operated by a relatively stationary controller in accordance with signals received from torque sensing means mounted on the input end of the shaft to measure the input torque. The electric motor may be of the D.C. brushless type, with field coils or permanent magnets located in slots on the rotor, and the windings on the stator, the windings being operated by a microprocessor-based controller, so that the motor can be operated quickly and accurately. The main requirements for the electric motor are that it operates efficiently, and responds quickly. Subsidiary requirements are that it should be as small as possible, and that it should run smoothly, so that the "feel" of the mechanism, as fed back to the steering wheel, is consistent.

If the motor is to be efficient, it must generate the torque required using a minimum of power, so that its inertia should be low. The torque/inertia ratio of the motor is often used as a measure of efficiency. The inertia of the motor also affects the high frequency response of the servo, and therefore its stability. The motor inertia referred to the shaft should therefore be as low as possible. If the rotor is fixed directly to the shaft, so that it rotates with the shaft, the motor needs to be quite large and heavy to generate the required torque. The rotor can instead be geared to the shaft, so that it rotates faster than the shaft. The motor can then be smaller (for a given output torque), but the extra speed causes the inertia referred to the shaft to be larger. This effect removes most of the advantage of the gearing, so that the torque/inertia ratio of the geared and ungeared motors is not substantially different. The high speed geared motors will tend to run smoothly, but have disadvantages if the servo fails, and the shaft has to be operated wholly manually. In this event, the windage and other friction losses are significant, so if a minimum performance is required in the failed case a high speed geared motor is not satisfactory. On the other hand, if a slow speed motor is to run smoothly, it must have a large number of slots in the rotor for the coils, and this reduces the torque capability and increases the cost. As a result, it is often very difficult to select a motor which will meet all the requirements.

According to the present invention, in a servo mechanism for a rotary shaft of the kind set forth, the electric motor has two relatively rotatable members, one carrying the field magnet means, and the other the variable current coil means, with a first member being fixed to, and rotatable with the shaft, and a second member being arranged for contra-rotation relative to the first member and the shaft.

This arrangement of course increases the effective speed of the electric motor and, as explained in detail below, can even improve the torque/inertia ratio. In comparison with the conventional slow speed ungeared motor, the speed of the motor is increased so that it runs more smoothly without any need to increase the number of slots for the field magnet means. However, this arrangement does not have the disadvantages associated with the conventional high speed geared motor, as in comparison with these, the performance in the failed case is generally better.

The contra-rotating member is conveniently driven from the other member by means of a suitable gear train. Bevel gears may be used if the two members are required to rotate at the same speed in opposite directions; otherwise a planetary gear train will be appropriate. The mechanism preferably includes mounting means for mounting the members and the gear train. The mounting means may comprise a tubular member attached to the shaft and carrying the member rotatable with the shaft, with a further member carrying the contra-rotating member.

Preferably, the member with the greater moment of inertia is the one fixed to the shaft. This will generally be the outer member. The motor is preferably of the D.C. brushless type.

Two further problems may be encountered in conventional servo mechanisms of the kind set forth, where the electric motor is operated by a relatively stationary controller in accordance with the signals received from torque sensing means mounted on the input end of the shaft to measure the input torque.

Firstly, although the motor generally has the variable current coil means on the relatively stationary member so that it is easy to transmit operating signals from the stationary controller to the motor, difficulties may arise in transmitting signals reliably from the rotatable torque sensing means to the stationary controller, as known methods such as slip rings or contactless sensors are not satisfactory. Preferably therefore a torque sensing means and a controller for operating the motor are mounted on the shaft. This makes it easy to transmit signals from the torque sensing means to the controller. The motor member rotatable with the shaft conveniently carries the variable current coil means, so that it is also easy to transmit signals from the controller to the motor. Such an arrangement may also be used where the motor has only one rotatable member.

Secondly, with the conventional servo mechanisms, it is only the input torque that is sensed. This means that the controller operates the electric motor in accordance with its expected torque output, but there is no feedback to ensure that the torque actually delivered by the motor is the amount needed to produce the given torque output from the shaft. Such a conventional arrangement may adopted with the present invention, but preferably the torque sensing means senses both the input torque applied to the shaft and the output torque produced by the motor, to provide the required feedback.

In either case, the torque sensing means preferably has first and second sensor elements fixed respectively at input and output ends of the shaft. Conveniently the elements are located adjacent each other at the input end, with the second element carried by a member fixed at the output end. Relative angular movement of the elements is sensed to indicate the difference in torque between the input and output ends of the shaft. This difference, which provides a measure of the magnitude and direction of the difference between the input and output torques, may be used simply as a measure of the input torque, in enabling the controller to operate the motor. Alternatively, the member carrying the second element may include a torsionally elastic member, which enables the torque sensing means to produce a difference or error signal as a measure of the difference between the input and output torques. The error signal has both magnitude and direction and can be used by the controller to operate the motor. The relative stiffness of the shaft and the torsionally elastic member determine the servo gain.

The torque sensing means may be of any suitable type, such as a Hall effect sensor. The controller is preferably microprocessor based.

The servo mechanism may be used in a vehicle power steering system, with the rotary shaft comprising the steering column, so that manual operation of the steering wheel provides the input torque, and the output torque is used to operate the steering system. In this case, the motor is not required to operate when the steering wheel is in its neutral position. The controller therefore may include a sensor to sense this neutral position, and is arranged so that it will not operate the motor when it is in the neutral position. The sensor may be of any suitable type, such as magnetic.

Where the servo mechanism is used as part of a power steering system further use may be made of the controller, when it is mounted on the steering column, as it may be used to control other electrical items which are normally found on the steering column, such as direction indicators, windscreen wipers and the like.

Some embodiments of the present invention are illustrated by way of example in the accompanying drawings, in which:-

Figure 1 is a graph showing the characteristics of an electric motor with contra-rotating members in comparison with a conventional ungeared motor;

Figure 2 is a longitudinal section through a servo mechanism for a rotary shaft incorporating an electric motor with contra-rotating members; and

Figure 3 shows a modification of Figure 2.

Figure 4 is similar to Figure 2, but shows a further modification.

Where a servo mechanism for a rotary shaft incorporates an electric motor mounted on the shaft to augment an input torque applied to the shaft, the basic requirements for the motor are that it should be efficient and responsive, which requires a high torque/inertia ratio, and that it should have a reasonable performance in the failed case and run smoothly, without being too large or expensive in construction. The present invention makes use of the fact that arranging the members of the motor for contra-rotation, instead of having one member stationary and the other rotatable, makes it easier to meet these requirements.

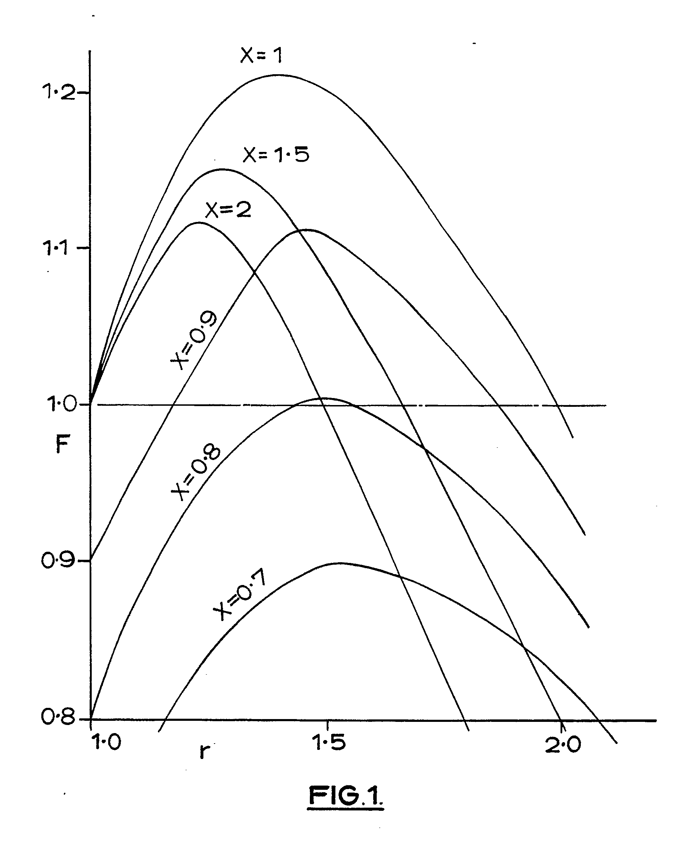

The graph of Figure 1 compares a motor with contra-rotating members with a conventional ungeared motor (that is, one with the rotatable member fixed directly to the shaft), in terms of the torque/inertia ratio and the relative speed of rotation of the members.

Considering first an ungeared conventional motor, this has a rotatable member A fixed to the shaft, and having a moment of inertia $I_A$, and a stationary member B. If the shaft has an angular velocity $\omega$, the slip velocity between A and B is also $\omega$. For a given $\omega$, let the total output torque be K, then

Torque/Inertia ratio (1) = $T/I = K/I_A$.

If the member A is stationary, and B is rotatable with the shaft, with a moment of inertia $I_B$, then

Torque/Inertia ratio (2) = $T/I = K/I_B$.

The maximum of these two ratios (1) and (2) is used for the purposes of comparison.

Considering next a motor with contra-rotating members, this has a member A (with actual moment of inertia $I_A$) fixed to and rotatable with the shaft, and a member B (with actual moment of inertia $I_B$) geared to the shaft. Let $x = I_B/I_A$.

If the shaft has an angular velocity of $\omega$, the slip velocity between A and B is $r\omega$, where $r>1$. The absolute angular velocity of A is ω, and of B is rω-ω = ω (r-1).

For given ω, let the torque generated between A and B = K.

Then total generated power = Krω (torque x slip velocity) and

total output power = Tω (output torque T x shaft velocity).

Ignoring the gearing losses, generated power = output power, so Krω = Tω

giving T = Kr.

The total inertia referred to the shaft = $I_A + I_B(\omega \, (r-1)/\omega)^2$

= $I_A + xI_A(r-1)^2$

= $I_A (1 + x(r-1)^2)$.

Then $T/I = Kr/I_A (1 + x(r-1)^2)$.

Figure 1 shows the result of plotting r (slip velocity/output velocity) against a figure of merit, F = T/I for the contra-rotating motor/maximum T/I for the ungeared motor, for different values of x (the ratio of actual moment of inertia $I_B/I_A$). Each value of x gives a curve; where the curves lie above the line figure of merit = 1, the torque/inertia ratio of the contra-rotating motor is better than that of the ungeared motor, and each curve has an optimum value of r which maximises the torque/inertia ratio. It will be noted that x = 1 (where the actual moment of inertia of A and B are equal) is the best, with the greatest maximum value of torque/inertia ratio and an advantage where r is between 1 and 2, at which point A and B are rotating at the same speed in opposite directions. In practice, it is not possible for A and B to have the same actual moment of inertia, and so x will normally be between 0.8 and 1.2. The curves where x>1 (where the member A has a smaller actual moment of inertia) and where x<1 (where the member A has a greater moment of inertia) have different characteristics. Where x>1 the maximum value of the torque/inertia ratio is greater, but for a smaller value of r, and the gradient of the curves is greater. Where x<1, the maximum value of the torque/inertia ratio is less, but occurs at a greater value of r, and the gradient of the curves is less. If it is only necessary to maximise the torque/inertia ratio, then it will be appropriate to choose x>1, and to set r for the maximum value of torque/inertia ratio. However, if r is required to be greater, to ensure that the motor runs more smoothly, it will usually be appropriate to choose x<1, which for a given r (above say 1.5) is likely to give a greater value of torque/inertia ratio than the corresponding x>1. It should also be noted that for a given motor configuration, where x 0.8 say, a value of r = 2 substantially doubles the output torque of the motor in comparison with a value of r = 1. This enables the size of the motor members to be reduced, and gives an improvement in performance in the failed case.

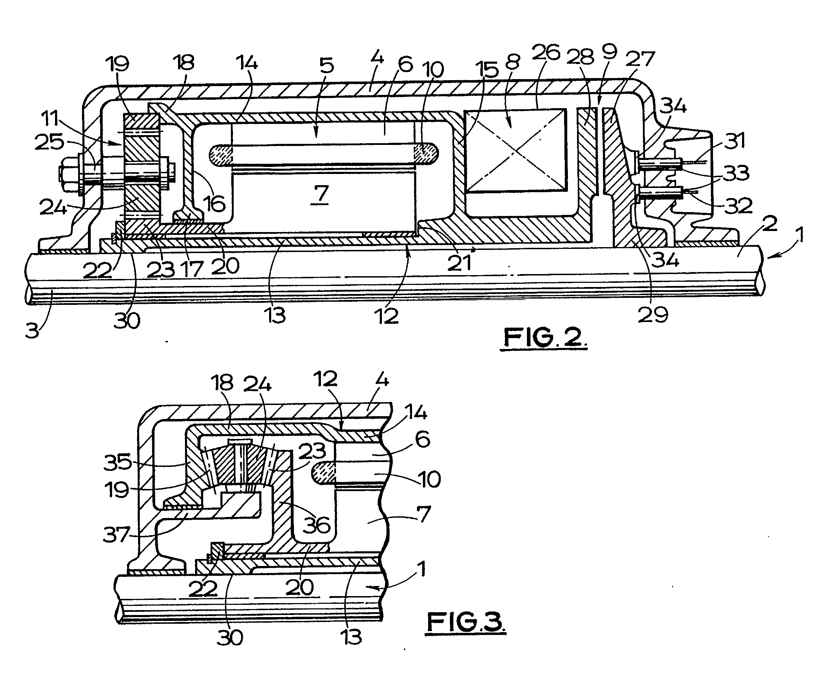

Figure 2 shows a servo mechanism incorporating an electric motor with contra-rotating members, in which x is about 0.8, and r is between 1.5 and 2. The servo mechanism shown in Figure 2 is for a vehicle power-assisted steering system, in which a rotary shaft 1 is the steering column, to one end 2 of which input torque from a steering wheel (not shown) is applied, and from the other end 3 of which output torque is transmitted to operate a steering system (not shown). The servo mechanism is located in a stationary housing 4 in which the shaft 1 is journalled for rotation. It comprises an electric motor 5 with contra-rotating members 6,7 mounted on the shaft 1 and operative to augment the output torque, together with a controller 8 and torque-sensing means 9, both of which are also mounted on the shaft 1, the controller 8 being responsive to signals from the torque sensing means 9 to operate the motor 5 to produce a given output torque.

The electric motor 5 is D.C. operated, with the members 6,7 driven in opposite directions. The first member 6, which has variable current windings 10, is rotatable with the shaft 1, while the second member 7, which carries the field magnet means in slots (not shown), is driven from the first by a gear train 11. The members 6,7 are mounted on the shaft 1 by a mounting means 12. This has an inner tubular member 13 which is fixed to the shaft at the output end 3 and extends towards the input end 2, where it carries part of the torque sensing means 9, as explained in detail below. The mounting means 12 also has an outer tubular member 14, which is connected to the inner member 13 by an annular flange 15. The outer member 14 also has an inwardly extending flange 16 adjacent the output end, with a radial clearance between the outer surface of the inner member 13, and the inner end 17 of the flange 16, and an extension 18 carrying an internally-toothed gear ring 19, which forms part of the gear train 11. The first member 6 is fixed to the inner surface of the outer tubular member 14, while the second member 7, which has a cylindrical extension 20 at the output end, is journalled for rotation on the outer surface of the inner member 13, and on the inner end 17 of the flange 16. The second member 7 is prevented from moving axially relative to the shaft 1 by a step 21 in the inner tubular member 13, and a circlip 22 attached to the output end of the tubular member 13. The cylindrical extension 20 carries a pinion 23, forming part of the gear train 11, which is completed by three idlers 24 (only one of which is shown) operative to transmit the drive between the gear ring 19 and the pinion 23. The idler 24 is carried by a spindle 25 fixed to the housing 4. It will be noted that the first member 6, rotatable with the shaft 1, has a greater actual moment of inertia than the second member 7, as it is the outer member. The gear train 11 causes the actual speed of rotation of the second member 7 to be more than that of the first member. The motor 5 is of the brushless type, and commutation is controlled by the controller 8.

The controller 8, which is shown in schematic form, includes a microprocessor unit, commutation transistor switches and a position sensor all mounted on a member 26 fixed to the flange 15 of the mounting means 12, and therefore rotatable with the shaft 1. The microprocessor unit receives signals from the torque sensing means 9, and uses them to produce a control signal for the windings 10 of the motor 5, in the form of a series of pulses, the mark/space ratio of which varies in accordance with the output torque required, and a commutation signal to control the switches. As the member 6 and the controller 8 are both rotatable with the shaft 1, there is very little relative angular movement between them, so that wires (not shown) are used to transmit the control signals. The position sensor is adapted to sense when the controller 8 is at a datum position relative to the housing 4, normally when the steering system is straight ahead. The position sensor provides a signal to the controller 8.

The torque sensing means 9 senses the torque over a length of the shaft 1, between the input and output ends of the shaft, which is used as a measure of the input torque. The sensing means 9 has two sensor elements 27,28, relative angular movement of which is used to indicate the amount of torque. The first element 27 is fixed directly to the input end of the shaft 1, at a point 29, and the second element 28 is located adjacent to it, but is carried by the inner tubular member 13, so that it is fixed to the output end 3 of the shaft 1, at a second point 30. Input torque applied to the shaft 1 will cause relative torsional movement of the shaft between the points 29,30, which in turn causes relative angular movement of the sensor elements 27,28. This movement provides a measure of the magnitude and direction of the difference between the input and output torques, and is transmitted to the controller 8 as the torque signal. As the controller 8 and sensor elements 27,28 are rotatable with the shaft 1, there is very little relative angular movement between them, so that wires (not shown) are used to transmit the torque signal. The sensing means 9 may be of any suitable type.

The electrical power required to operate the servo mechanism is transmitted from a pair of leads 31,32 via brushes 33, slip rings 34 mounted on the sensor element 17, and a lead (not shown) to the controller 8.

In operation, an input torque applied to the shaft 1 causes angular deflection of the shaft between points 29 and 30. The relative movement at 30 is transmitted back to the sensor element 28 by the member 13 to cause a torque input signal to be generated by the sensing means 9. The controller is programmed to respond by sending appropriate power pulses to the motor windings to generate a torque in a direction which augments the input torque, and of magnitude related to the input torque signal by constants built into the program. The motor torque reaction on member 6 of the motor is fed directly to the shaft at 30 via the tube 14, the flange 15 and the tube 13. The motor torque reaction on the member 7 of the motor is fed indirectly to the shaft at 30 via the gear train 11, the tube 14, the flange 15 and the tube 13. In this case the servo gain is determined by the stiffness of the shaft between 29 and 30, the sensitivity of the sensor 9 and the program constants. However, the controller 8 is also responsive to the signal from the position sensor, and is arranged so that it does not operate the motor 5 when it is in its datum position. This ensures that the motor 5 does not operate when the vehicle is travelling in a straight line, when power assistance is not required.

In the embodiment of Figure 2 the arrangement of the gear train 11 is such that it is not possible for the members 6,7 to rotate at the same speed. If this is required, a bevel gear train may be used, as shown in Figure 3. Figure 3 shows only the output end of the servo mechanism, with the modified gear train 11, and corresponding reference numerals have been applied to corresponding parts. The mounting means 12 is modified, with the flange 16 omitted, and the extension 18 having an inwardly-extending flange 35 carrying the bevel gear ring 19. The cylindrical extension 20 on the second member 7 has an outwardly-extending flange 36, which carries a corresponding pinion 23. The idler 24 is again carried from the housing 4, on an axially-extending carrier 37, on which the flange 35 is journalled for rotation. The remainder of the construction and operation of the servo mechanism of Figure 3 is the same as that of Figure 2.

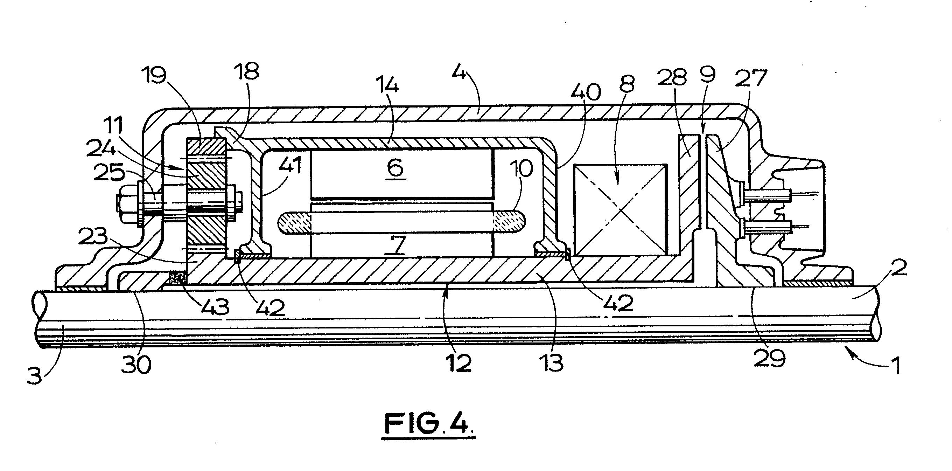

In the embodiments of Figures 2 and 3 the outer motor member, which has the greater actual moment of inertia, is fixed to the shaft, so that in terms of the graph of Figure 1, x<1. In the modification of Figure 4, the inner motor member 7 is fixed to the shaft, and the outer member 6 is driven by the gear train 11, to provide x<1. The embodiment of Figure 4 also illustrates a modification to the operation of the torque sensing means 9, which is arranged to provide an error signal, having magnitude and direction, of the difference between the input and output torques, rather than an input signal, thus providing feedback to ensure that the torque delivered by the motor is actually what is required.

The embodiment of Figure 4 is similar to that of Figure 2, with the motor 5, mounting means 12 and torque sensing means 9 modified. In Figure 4 the second motor member 7 carries the windings 10, and is fixed to the tubular member 13, which as before is fixed to the shaft 1 at point 30. The tubular member 13 also has the pinion 23 of the gear train 11, and the controller 8 is mounted on the member 13 adjacent the input end of the shaft 1. The first motor member 6 is attached to the outer mounting member 14, which is separate from the inner member 13, and has two annular flanges 40,41, the inner ends of which are journalled for rotation on the outer surface of the tubular member 13. Axial movement of the member 14 is prevented by circlips 42 provided on the tubular member 13. The member 14 has the extension 18 carrying the gear ring 19, and the gear train 11 is completed by the idlers 24, which transmit the drive from the pinion 23 to the ring 19. The tubular member 13 also has a torsionally elastic portion 43, which enables the torque sensing means to produce the error signal of the difference between the input and output torques. The controller 8 is programmed to operate the motor 5 to reduce the error signal, to ensure that the output torque is actually what is required for a given input torque. The remainder of the construction of Figure 4 is the same as that of Figure 2.

In operation, the input torque applied to the shaft 1 causes angular deflection of the shaft between points 29 and 30. The relative movement at 30 is transmitted to the sensor element 28 by the member 13, and causes an error signal to be generated by the sensing means 9. This is fed to the controller 9, which responds by operating the motor 5 to generate torque in a direction to augment the input torque. The motor torque reaction on the member 7 is fed directly to the shaft at 30 by the tubular member 13, while that on the member 6 is fed directly to the point 30 through the member 14, the gear train 11 and the member 13. The total motor torque also deflects the torsionally elastic portion 43 of member 13 to create relative movement of the sensor elements 27,28 in a direction which tends to cancel the signal produced by the input torque. If the stiffness of the shaft between 29 and 30 equals the stiffness of the elastic portion of the tube 13 then the contribution to the final output made by the motor will be substantially equal to that made by the input when the signal has been reduced appropriately. Less stiffness in the tube 13 will cause a corresponding reduction in the contribution made by the motor. In any particular design, the servo gain is therefore determined by appropriate choice of stiffness for the shaft between 29 and 30 and the elastic portion 43 of the tubular member 13.

In a further modification, not shown, the controller 8 may be used to operate other electrical items, such as direction indicators, or windscreen wipers, the switches for which are normally located on the steering column. Using the controller 8 for these has the advantage of greatly reducing the amount of wiring needed.

## Claims

1. A servo mechanism for a rotary shaft (1) in which an electric motor (5) mounted on the shaft (1) is operated in response to an input torque applied to the shaft (1) to produce a given output torque from the shaft (1), with the electric motor (5) having two relatively rotatable members (6,7) one member (7 or 6) carrying field magnet means and the other member (6 or 7) carrying variable current coil means (10), characterised in that a first member (6 or 7), is fixed to and is rotatable with the shaft (1), and a second member (7 or 6) is arranged for contra-rotation relative to the first member (6 or 7) and the shaft (1).

2. A servo mechanism according to claim 1, in which the contra-rotating member is driven from the first member by means of a gear train (11).

3. A servo mechanism according to claim 2, in which the mechanism includes mounting means (12) for mounting the members (6,7) and the gear train (11).

4. A servo mechanism according to claim 3, in which the mounting means (12) comprises a tubular member (13) attached to the shaft (1), the member rotatable with the shaft (1) being carried from the tubular member (13), and a further member (20,14) carrying the contra-rotating member.

5. A servo mechanism according to any of claims 2 to 4, in which the gear train (11) is a bevel gear train.

6. A servo mechanism according to any of claims 2 to 4, in which the gear train (11) is a planetary gear train.

7. A servo mechanism according to any preceding claim, in which the member (6,7) with the greater moment of inertia is fixed to the shaft (1).

8. A servo mechanism according to any preceding claim, in which the outer motor member (6) is fixed to the shaft (1).

9. A servo mechanism according to any of claims 1 to 7, in which the inner motor member (7) is fixed to the shaft (1).

10. A servo mechanism according to any preceding claim, in which a torque sensing means (9) is mounted on the shaft (1), and comprises first and second elements (27,28) fixed respectively at input and output ends (2,3) of the shaft (1), relative angular movement of the elements (27,28) being sensed.

11. A servo mechanism according to claim 10, in which the elements (27,28) are located adjacent each other at the input end (2) of the shaft (1), with the second element (28) carried by a member (13) fixed at the output end (3) of the shaft (1).

12. A servo mechanism according to claim 11, in which the member (13) includes a torsionally elastic portion (43).

13. A servo mechanism according to any of claims 10 to 12, in which a controller (8) for operating the motor (5) is mounted on the shaft (1).

14. A servo mechanism according to claim 13, in which the member (6 or 7) fixed to the shaft (1) carries the variable current coil means (10).

15. A servo mechanism according to claim 13 or claim 14, in which the controller (8) includes a sensor to sense a neutral position of the shaft (1).

FIG.1.

FIG. 2.

FIG.3.

EP 0 403 234 A2

**FIG. 4.**